# FASCICULE DE BREVET EUROPEEN

(11) **EP 0 651 241 B1**
(45) Date de publication et mention de la délivrance du brevet: **10.06.1998**
(21) Numéro de dépôt: 94402410.8
(22) Date de dépôt: 26.10.1994
(51) Int. Cl.: G01M 3/20

(54) **Détecteur de fuite à gaz traceur et procédé de fonctionnement**
Spürgas-Leckdetektor und Verfahren zum Betrieb
Tracer gas leak detector and operating procedure

(30) Priorité: 28.10.1993 FR 9312868
(43) Date de publication de la demande: 03.05.1995
(73) Titulaire: ALCATEL ALSTHOM COMPAGNIE GENERALE D'ELECTRICITE, 75008 Paris (FR)
(72) Inventeur: Baret, Gilles, F-74000 Annecy (FR)
(74) Mandataire: Pothet, Jean Rémy Emile Ludovic

(56) Documents cités:
- EP-A- 0 524 870

## Description

La présente invention concerne un détecteur de fuite à gaz traceur et son procédé de fonctionnement.

Un détecteur de fuite classique comporte au moins un spectromètre de masse à hélium et un groupe de pompage comprenant une pompe secondaire reliée au spectromètre et une pompe primaire reliée au refoulement de la pompe secondaire et enfin une conduite d'entrée reliant une bride d'entrée du détecteur au spectromètre, entre celui-ci et l'aspiration de la pompe secondaire, cette conduite étant équipée d'une vanne d'entrée. En outre, afin d'effectuer le vide préliminaire de la pièce à contrôler, la conduite d'entrée relie également la bride d'entrée directement à l'aspiration de la pompe primaire par l'intermédiaire d'une vanne. Il peut s'agir d'une vanne à trois voies qui permet la liaison de la pièce à contrôler à l'aspiration de la pompe primaire, ou bien la liaison entre le refoulement de la pompe secondaire et l'aspiration de la pompe primaire, sinon, il y a deux vannes distinctes : une pour chaque liaison ci-dessus.

Au cours d'un contrôle d'étanchéité, on commence, la vanne d'entrée étant fermée, par vider la pièce à contrôler au moyen de la pompe primaire puis, lorsque la pression dans la pièce à contrôler est descendue à 10⁻² mbar, on peut commencer à ouvrir la vanne d'entrée qui est une vanne d'étranglement. En effet, la pression dans le spectromètre ne doit pas monter au-dessus de 10⁻⁴ mbar à cause du filament chauffant qui brûlerait autrement. La vanne d'entrée à étranglement permet de maintenir cette pression dans le spectromètre, à condition de ne pas l'ouvrir avant que la pression ne soit descendue au moins à 10⁻² mbar dans la pièce à contrôler.

La présente invention a pour but de proposer un nouveau détecteur fonctionnant selon un nouveau procédé qui permet, si on le souhaite, de simplifier le détecteur, notamment en supprimant au moins une vanne. Par ailleurs, l'invention permet une diminution de la consommation d'énergie du détecteur et assure une plus grande durée de vie au spectromètre.

Ainsi, l'invention a pour objet un détecteur de fuite à gaz traceur, comprenant au moins un analyseur de gaz, un groupe de pompage relié à l'analyseur de gaz et comprenant une pompe secondaire et une pompe primaire, et une canalisation reliant une bride d'entrée à l'analyseur de gaz entre celui-ci et l'aspiration de la pompe secondaire, caractérisé en ce que ledit analyseur de gaz est du type dit "à cathode froide" à ionisation par champ électrique et sélection des ions par déviation par champ magnétique.

L'invention a aussi pour objet un procédé de fonctionnement d'un détecteur tel que ci-dessus, caractérisé par le fait que le détecteur étant relié à une pièce à contrôler, on commence par effectuer un prévidage de la pièce par ledit groupe de pompage relié à l'analyseur, l'analyseur étant hors alimentation, et par le fait qu'il est ensuite alimenté pour effectuer le contrôle d'étanchéité, dès que la pression dans l'analyseur est ≤ 10⁻⁴ mbar.

L'analyseur dit "à cathode froide" peut par exemple être du type tel que celui décrit dans l'article "a mass filter with a cold cathode" dans la revue Vacuum, volume 44, numéro 5-7, pages 661 à 663 de 1993.

Le système d'ionisation est constitué par un réseau de micropointes et d'une grille polarisée créant un champ électrique intense permettant l'ionisation du gaz à analyser. La sélection des ions, dans l'analyseur de l'article cité, est effectuée par un système de déviation quadrupole à champ électrique comportant quatre barres créant deux champs électriques orthogonaux.

Dans la présente invention, la sélection des ions est effectuée par une déviation des ions par champ magnétique, ce qui est plus simple.

L'utilisation d'un analyseur de gaz de ce type, calé sur le gaz traceur, en général l'hélium, présente plusieurs avantages : le temps de mise en service est de l'ordre de la microseconde à comparer avec un temps de l'ordre de 1 à 10 secondes dans le cas des détecteurs de fuite à gaz traceur actuels où l'analyseur de gaz est un analyseur comportant un filament chauffant.

Compte tenu de ce temps de mise en service, il est ainsi parfaitement possible d'éteindre l'analyseur entre deux essais et de prévider la pièce à contrôler directement par le groupe de pompage relié à l'analyseur, c'est-à-dire en passant par la pompe secondaire et la pompe primaire et d'allumer l'analyseur lorsque sa pression est compatible avec son fonctionnement correct, ce qui permet la simplification du détecteur, car on peut alors, dans le cas d'un détecteur fonctionnant en sens dit "direct" éviter la canalisation équipée d'une vanne reliant la bride d'entrée du détecteur à l'aspiration de la pompe primaire. Canalisation et vanne auparavant indispensables pour effectuer le prévidage de la pièce à contrôler, car tant que l'on n'avait pas atteint une pression dans l'analyseur ≤ 10⁻⁴ mbar, il n'était pas possible d'effectuer le prévidage par la pompe secondaire et la pompe primaire, car à cause du temps long de mise en service de l'analyseur, il n'était pas question de l'éteindre entre deux essais. En outre, la répétition fréquente de l'allumage et de l'extinction du filament aurait nuit à sa durée de vie.

L'utilisation d'un tel analyseur procure également un gain énergétique. En effet, la quasi totalité du courant fourni par l'alimentation de polarisation des pointes correspond au courant électronique utile pour ioniser.

La durée de vie est plus importante grâce à l'absence de filament porté à haute température.

On va maintenant donner la description d'un exemple de mise en oeuvre de l'invention en se reportant au dessin annexé dans lequel :

La figure 1 montre un détecteur de fuite à hélium selon l'invention.

La figure 2 est un schéma de principe montrant la partie de l'analyseur de gaz constituant le générateur de ionisation de gaz.

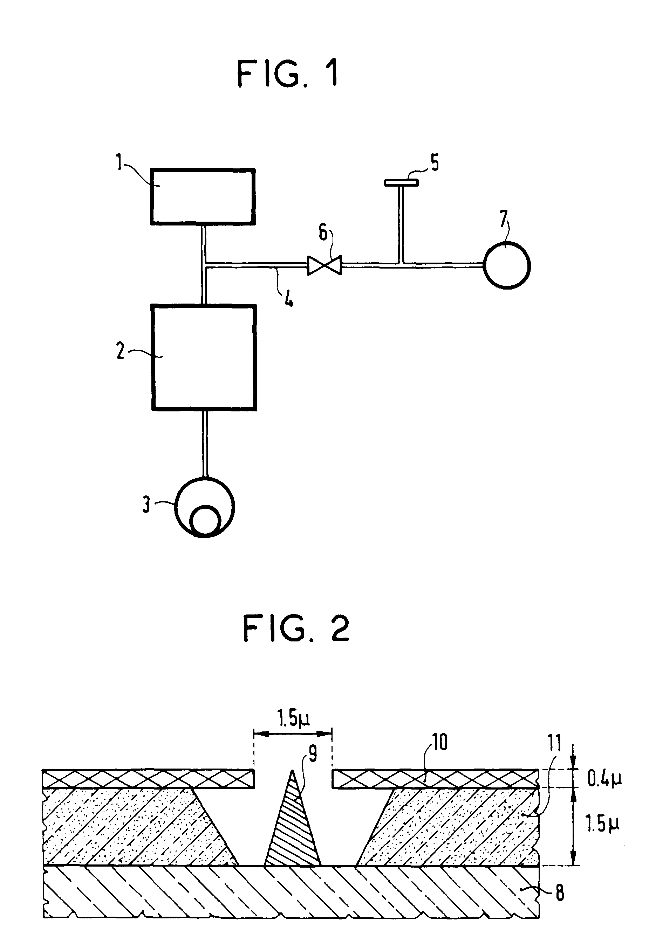

En se reportant à la figure 1, le détecteur comprend un analyseur de gaz 1 du type dit à "cathode froide", dans lequel l'ionisation du gaz est effectuée par un champ électrique intense. L'analyseur est relié à un groupe de pompage comportant une pompe secondaire 2 et une pompe primaire 3. Enfin, une canalisation 4 relie une bride d'entrée 5 du détecteur à l'entrée de l'analyseur. Une vanne d'entrée 6, vanne d'étranglement, peut équiper la canalisation 4. Cette vanne 6 n'est pas obligatoire. Elle est avantageuse dans le cas où les pièces à contrôler sont de grand volume de façon à pouvoir effectuer le contrôle dès que la pression dans la pièce, mesurée par une jauge 7, atteint 10⁻² mbar, la pression dans l'analyseur étant alors de 10⁻⁴ mbar.

La figure 2 est un schéma montrant le principe de réalisation d'un système de source d'ions du type à cathode froide rentrant dans un analyseur de gaz tel que 1, et dont la partie accélération et sélection des ions générés est classique, employant le système habituel dans les analyseurs de gaz utilisant un filament chauffé comme source génératrice d'ions, système qui comprend un champ électrique accélérateur et un champ magnétique créé par un aimant permanent pour la sélection des ions hélium en les entraînant sur une trajectoire circulaire (voir par exemple l'ouvrage "Pratique du contrôle de l'étanchéité à l'hélium" par Louis Maurice, édité par la Société française des ingénieurs et techniciens du vide, édition de 1968).

Ainsi, le principe de la source d'ions à cathode froide, représentée sur cette figure 2, comprend un substrat 8 en silicium dopé, sur lequel on a réalisé des pointes en tungstène, telle que celle 9 représentée, de l'ordre de 1,5 µm de hauteur. Une grille 10 est placée au-dessus des pointes 9 et elle est isolée du substrat 8 par une couche 11 d'oxyde de silicium SiO₂. La différence de potentiel entre la grille 10 et les pointes 9 est de l'ordre de 100 volts.

L'avantage d'un analyseur de gaz utilisant une source d'ions de ce type est l'absence de filament chauffant, d'où une absence d'échauffement des pièces voisines, un meilleur rendement, une durée de vie plus importante, et un temps de mise en oeuvre extrêmement court, qui rend possible l'extinction de la cellule d'analyse 1 entre chaque contrôle d'étanchéité, et cette possibilité est intéressante, car elle permet le prévidage de la pièce à contrôler en passant par la pompe secondaire 2 et la pompe primaire 3, et ainsi d'éviter comme on le voit sur la figure 1, l'habituelle liaison entre la bride 5 et l'aspiration de la pompe primaire 3, équipée d'une vanne.

Ainsi, lors d'un essai de contrôle d'étanchéité d'une pièce, celle-ci est reliée à la bride 5 et, l'analyseur 1 étant éteint, le groupe de pompage 2, 3 est mis en route, la vanne 6 est ouverte, et lorsque la pression dans l'analyseur 1 est descendue à au moins 10⁻⁴ mbar, on peut allumer l'analyseur et "arroser" la pièce à contrôler d'hélium pour vérifier l'étanchéité. Une fois l'essai terminé, il n'y a nul inconvénient à éteindre de nouveau la cellule 1.

D'autre part ce type de source d'ions a la capacité de fonctionner à haute pression grâce au très faible temps de mise en service qui permet de moduler l'alimentation de la source d'ions.

En excitant par exemple la source d'ions pendant 1 ms toutes les 10s il est possible de réaliser une mesure à haute pression de la pression totale par l'intermédiaire de la plaque triode qui existe habituellement dans les cellules d'analyse et utilisée comme jauge de pression. Cette mesure est fiable à partir de 10⁻² mbar ce qui était impossible auparavant du fait du risque de destruction du filament chauffant.

## Revendications

1. Détecteur de fuite à gaz traceur, comprenant au moins un analyseur de gaz (1), un groupe de pompage relié à l'analyseur de gaz et comprenant une pompe secondaire (2) et une pompe primaire (3), et une canalisation (4) reliant une bride d'entrée (5) à l'analyseur de gaz entre celui-ci et l'aspiration de la pompe secondaire, caractérisé en ce que ledit analyseur de gaz (1) est du type dit "à cathode froide" à ionisation par champ électrique et sélection des ions par déviation par champ magnétique.

2. Procédé de fonctionnement d'un détecteur de fuite selon la revendication 1, caractérisé par le fait que le détecteur étant relié à une pièce à contrôler, on commence par effectuer un prévidage de la pièce par ledit groupe de pompage (2, 3) relié à l'analyseur (1), ledit analyseur étant hors alimentation, et en ce que l'analyseur (1) est ensuite alimenté pour effectuer le contrôle dès que la pression dans l'analyseur est ≤ 10⁻⁴ mbar.

3. Procédé de fontionnement d'un détecteur de fuites selon la revendication 2, caractérisé par le fait que la mesure de pression dans l'analyseur est réalisée par la jauge triode se trouvant dans l'analyseur et ce dès une pression relativement importante grâce à la capacité de cette jauge de réaliser une mesure dès une pression de l'ordre de 10⁻² mbar.

## Patentansprüche

1. Spürgas-Leckdetektor, der wenigstens einen Gasanalysator (1), eine Pumpengruppe, die mit dem Gasanalysator verbunden ist und eine Sekundärpumpe (2) und eine Primärpumpe (3) umfasst, und eine Leitung (4) umfasst, die einen Eingangsflansch (5) mit dem Gasanalysator zwischen diesem und dem Einlass der Sekundärpumpe verbindet, **dadurch gekennzeichnet**, dass der Gasanalysator (1) von dem Typ, genannt "mit kalter Kathode", mit Ionisation durch ein elektrisches Feld und Auswahl der Ionen durch Ablenkung durch ein Magnetfeld ist.

2. Arbeitsverfahrens eines Leckdetektors nach Anspruch 1, gekennzeichnet durch die Tatsache, dass, wenn der Detektor mit einem zu prüfenden Teil verbunden ist, damit begonnen wird, eine Vorevakuierung des Teils durch die mit dem Analysator (1) verbundenen Pumpengruppe (2, 3) auszuführen, wobei der Analysator sich außerhalb der Zufuhr befindet, und dadurch, dass der Analysator (1) danach gespeist wird, um die Prüfung auszuführen, sobald der Druck im Analysator ≤ 10⁻⁴ mbar beträgt.

3. Arbeitsverfahren eines Leckdetektors nach Anspruch 2, gekennzeichnet durch die Tatsache, dass die Druckmessung im Analysator von einem Triodenmessgerät ausgeführt wird, das sich im Analysator befindet, und dies ab einem relativ großen Druck dank der Fähigkeit dieses Messgeräts, eine Messung ab einem Druck in der Größenordnung von 10⁻² mbar auszuführen.

## Claims

1. A tracer gas leak detector comprising at least one gas analyzer (1), a pump unit connected to the gas analyzer and comprising a secondary pump (2) and a primary pump (3), and a duct (4) connecting an inlet coupling (5) to the gas analyzer at a point between the gas analyzer and the inlet of the secondary pump, characterized in that said gas analyzer (1) is of the "cold cathode" type in which ionization is performed by an electric field, and in which ion selection is performed by deflection in a magnetic field.

2. A method of operating a leak detector according to claim 1, characterized by the fact that with the detector connected to a part to be tested, the method begins by pre-evacuating the part using said pump unit (2, 3) connected to the analyzer (1), said analyzer being switched off, and by the fact that the analyzer (1) is subsequently switched on to perform testing as soon as the pressure inside the analyzer is ≤ 10⁻⁴ mbar.

3. A leak detector operating method according to claim 2, characterized by the fact that pressure is measured in the analyzer by the triode gauge to be found in the analyzer, and that this is done from a relatively high pressure because of the ability of said gauge to perform measurements from a pressure of about 10⁻² mbar.
